# EUROPEAN PATENT SPECIFICATION

(11) **EP 2 736 035 B1**
(45) Date of publication and mention of the grant of the patent: **21.10.2020**
(21) Application number: 13157152.3
(22) Date of filing: 28.02.2013
(51) Int. Cl.: G09F 27/00

(54) **Creating smart NFC posters**
Erzeugung intelligenter NFC-Poster
Création d'affiches NFC intelligentes

(30) Priority: 26.11.2012 US 201261729849 P
(43) Date of publication of application: 28.05.2014
(73) Proprietor: BlackBerry Limited, Waterloo, ON N2K 0A7 (CA)
(72) Inventor: Bhatnagar, Prateek, Whitby, Ontario L1N 0C3 (CA); Kollipara, Sri Ganesh Prasad, Rolling Meadows, IL 60008 (US); Vick, Steven, Rolling Meadows, IL 60008 (US); Moosavi, Vahid, Waterloo, Ontario N2L 3W8 (CA); Rose, Scott Douglas, Waterloo, Ontario N2L 3W8 (CA); Griffin, Jason Tyler, Waterloo, Ontario N2L 3W8 (CA)
(74) Representative: MERH-IP Matias Erny Reichl Hoffmann Patentanwälte PartG mbB

(56) References cited:
- CN-U- 202 548 841
- CN-Y- 201 302 803
- US-A1- 2010 161 410
- Ad-pods: "NFC Smart Posters - Fully interactive with nfc tag and qr code", Youtube, 8 June 2012 (2012-06-08), page 1 pp., XP054978853, Retrieved from the Internet: URL:https://www.youtube.com/watch?v=4Rpc3u 8m-ZY [retrieved on 2018-11-12]

## Description

### Field of the Disclosure

This application relates to the field of communications, and more particularly, to Near Field Communications (NFC) and other short range wireless communications protocols.

### Background

A recent trend in mobile communications has been to incorporate Near Field Communication (NFC) and other short-range wireless communications protocols into mobile devices and other communications systems and components. NFC and other short-range communications devices can initiate and execute fully and/or semi-automatic wireless data interchanges by being brought into or otherwise placed in sufficiently close proximity, or in some embodiments by brief, controlled contact, or device "kissing."

Systems, devices, and methods adapted for NFC and other short-range communications processes can be applied in a wide variety of uses. Such uses can, for example, include the sharing of information among groups of people (for example, the public) by means of posters and other fixed devices comprising NFC-capable data storage devices. For example, passive and/or active NFC devices embedded in or otherwise attached to posters can be used to share a wide variety of information related to advertisements, public notices, etc.

In view of the very powerful potential of such NFC-capable ("smart") posters, it is desirable to improve efficiency in their production.

US2010161410 discloses An NFC enabled telecommunications communication device is mounted behind the touch point of a smart poster. The content data downloadable from the smart poster is managed remotely, monitored and usage data of the smart poster analyzed at a server via the telecommunications device.

CN202548841 U discloses an intelligent poster. The intelligent poster comprises a display unit and an intelligent RFID (Radio Frequency Identification Devices) chip, wherein the display unit is used for displaying preset picture contents; the intelligent RFID chip is arranged on the surface or at the inner side of the display unit, stores a unique electronic code, is detected in signal by a mobile terminal and sends the unique electronic code to the mobile terminal. The utility model also provides a data transmission system. The data transmission system comprises the intelligent poster and the mobile terminal, wherein the mobile terminal is internally provided with an NFC (Near Field Communication) reading head used for reading the unique electronic code of the intelligent RFID chip and an information processing unit which processes the information of the unique electronic code, calls an information database of a background website and enables the screen of the mobile terminal to pop a service information webpage. According to the utility model, a user can obtain the service information webpage aiming at the intelligent poster by only reading the intelligent RFID chip through the mobile terminal or scanning a code or a two-dimension code through a camera of the mobile terminal so as to acquire relevant
services and information.

CN201302803 Y discloses a multimedia poster, which comprises a poster body, wherein the poster body is equipped with a non-contact tag, the non-contact tag comprises an REID antenna and a storage module, and multimedia information is stored in the storage module. The utility model greatly enriches functions of the prior posters and realizes interaction of the poster and users.

Ad-pods: "NFC Smart Posters - Fully interactive with nfc tag and qr code", Youtube, 8 June 2012, URL: https://www.youtube.com/watch?v=4Rpc3uBm-ZY relates to a smart poster with the visual impact of a traditional poster but also an enhanced interactivity by using NFC tap and QR codes.

### Description of drawings

Examples of various aspects and embodiments of the invention are shown in the drawings, and described therein and elsewhere throughout the disclosure. In the drawings, like references indicate like parts.
Figures 1- 3 are schematic diagrams of systems and devices useful in implementing various aspects of the disclosure.
Figures 4 and 5 are schematic diagrams of smart posters implemented in accordance with the disclosure.

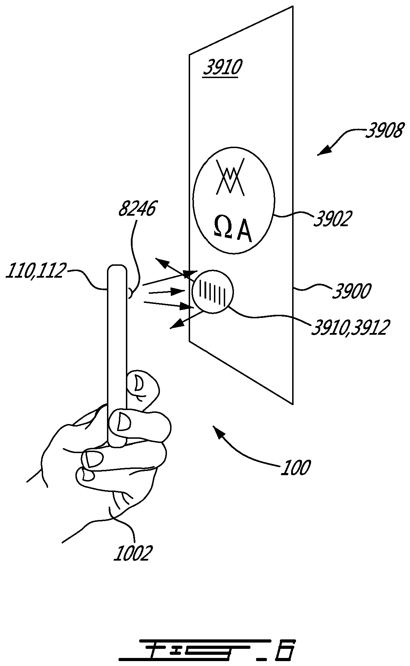

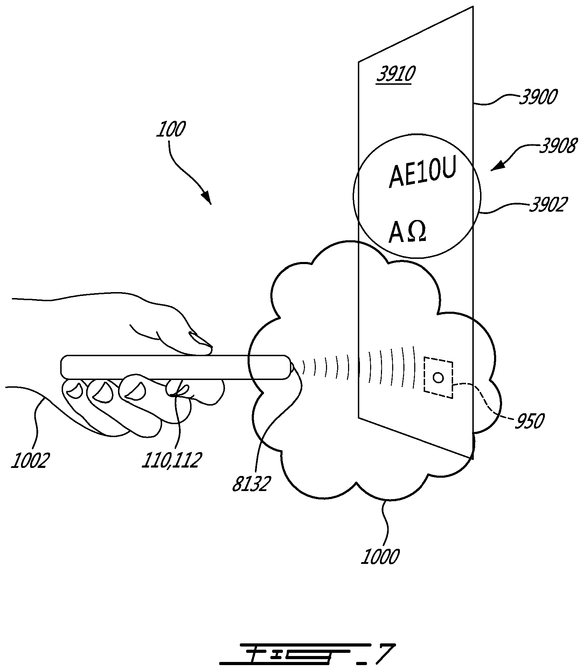

Figures 6 and 7 are schematic diagrams of device - poster interactions in accordance with the disclosure.
Figures 8 and 9 are schematic flow diagrams showing processes suitable for use in implementing aspects of the disclosure.

### Detailed Description

In one aspect, the disclosure provides a system comprising a poster and a wireless communications device according to claim 1.

In a further aspect, the disclosure provides a method of writing data to smart posters, comprising the steps defined in claim 10.

In further examples, the disclosure provides systems, methods, and computer programming products, including non-transient machine-readable instruction sets, for use in implementing such methods and making such posters.

Near-field communication(s) (NFC) are wireless communications between two or more suitably-configured devices when the devices are placed or otherwise disposed within a desired, typically relatively proximity to one another. Such communications can, for example, be initiated on a fully or partially automatic basis when the two or more devices are placed within desired proximity of one another, and can occur between any two or more of active and/or passive NFC devices.

As will be appreciated by those skilled in the relevant arts, once they have been made familiar with this disclosure, NFC communications in accordance with this disclosure can be conducted according to any suitable protocols, including a number of protocols now in widespread public use, as well as protocols yet to be developed.

In general, an NFC transaction, or data interchange, may be initiated by bringing two or more NFC-enabled devices into close proximity of one another. "Close proximity" can, as will be apparent to those skilled in the relevant arts, once they have been made familiar with this disclosure, mean any proximity suitable to a desired purpose, and typically means sufficiently close that it may be presumed that communications between the two or more NFC devices is desired. For current NFC applications, for example, "close proximity" can mean one or several centimeter, or shorter or longer distances, depending for example upon the purpose and nature of the NFC transaction and the NFC-enabled devices. The action of bringing such NFC-enabled devices into sufficiently close proximity may trigger automatic or semi-automatic activation of an NFC circuit, and/or an NFC communication.

For purposes of this disclosure, NFC communications may be conducted according to any desired wireless communications protocol(s), including for example those published or otherwise adopted by the various NFC and/or Radio Frequency Identification (RFID) industry federations, councils, groups, and boards, and their members, as well as any or all of Bluetooth or WiFi wireless protocols, including for example any or all of Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), GSM, 3GPP, 4G, or other wireless protocols.

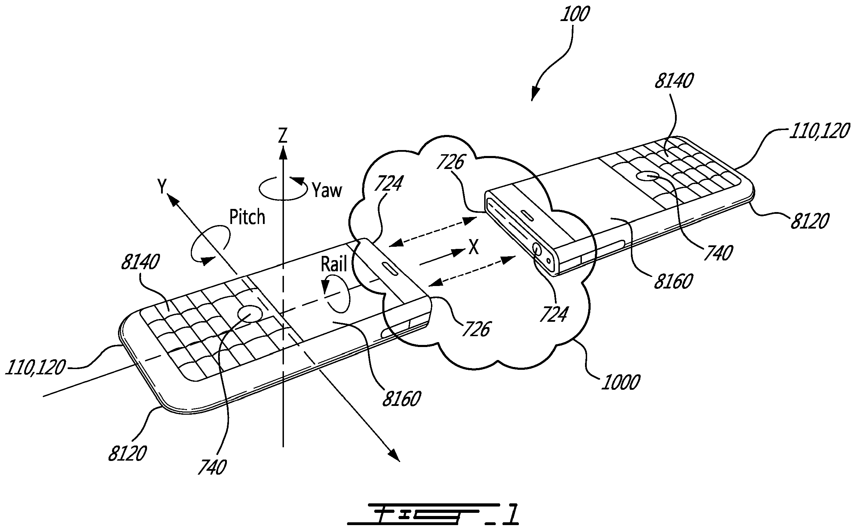

An example of an NFC system 100 suitable for use in implementing various aspects of the disclosure is shown in Figure 1. In the embodiment shown in Figure 1, system 100 comprises two active NFC devices 110, in the form of smartphones or other wireless handheld or mobile devices 120. Bringing active NFC-capable devices 110, 120 close enough together, by for example moving them physically toward each other into very close proximity, or into actual physical contact, can provide an operationally easy interface to set up, and initiate a wireless NFC connection.

For example, in the embodiment illustrated in Figure 1, relative movement of the devices 110, 120 toward one another may induce the Hall effect in a magnetic field sensor incorporated within one or both of the devices, and so trigger execution of an NFC query and authorization process and, conditioned upon authorization, establishment of a uni- or bi-directional wireless communication session between the devices. In one non-limiting example, one or both of devices 110, 120 is provided with either a magnet 724 or a magnetometer, i.e., a magnet sensor 726, such as a Hall effect sensor or magneto-resistive sensor, or both. The devices 724, 726 may be matched in a single touch or other gesture adapted to bring the devices into suitably close proximity (sometimes termed a "kiss" gesture because the two devices 110, 120 typically touch or "kiss" each other or are very close and in adjacent proximity).

An example of a suitable proximity for such embodiments may be in the range of about 10 to 20 mm, but the range may be more or less depending on the strength and/or sensitivity of the magnets, sensors, and other components involved, and the purposes for which the device(s) 110, 120 and/or system 100 is intended. The sensor(s) 726 on each device 110, 120 may be aligned to the magnet on the respective other device, as illustrated in Figure 1. One or both of the sensors 726 senses ("sees") the corresponding magnet 724 pursuant to the Hall effect, causing a voltage variation or other signal to be generated by the sensor and transmitted to a processor, so as to activate an NFC circuit to communicate with the other device using the protocol of an associated NFC Stack or other wireless communication(s) subsystem or device(s). The devices 110 can then communicate with each other using any NFC protocol suitable for the intended purpose.

Establishment of NFC communications sessions between the devices 110, 120 can be conditioned on suitably-adapted authorizations, using, for example, PIN numbers and/or other security keys.

Interaction between active NFC devices 110 as shown, for example, in Figure 1, can be considered peer-to-peer NFC interactions.

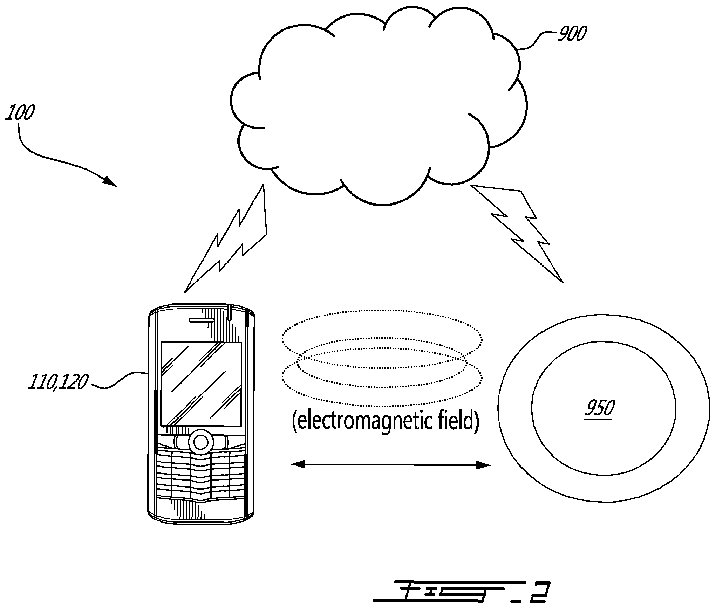

Figure 2 illustrates an example of another NFC system 100 suitable for use in implementing various aspects of the disclosure. In the embodiment shown in Figure 2, system 100 comprises an active NFC device 110, in the form of a smartphone or other wireless handheld or mobile device 120, and a passive NFC device 950 such as an RFID or other NFC tag, which may for example be attached to an NFC poster, or 'smart' poster. Bringing an active NFC-capable device 110, 120 close enough to a passive device 950 such as a tag embedded within or otherwise attached to a poster can cause query, authorization, and/or data interchange processes to fully or semi-automatically execute using magnets, Hall effect sensors, and/or other proximity-detecting mechanisms as described above and elsewhere herein.

A passive NFC device 950 in accordance with the invention can comprise one or more memory(ies), including both volatile and/or persistent (i.e., non-transient) media for storing data readable by active NFC (i.e., wireless) device(s) 110, 112. Data stored by passive device(s) 950 and read by active device(s) 110, 112 can include any data suitable for desired purpose(s). For example, a passive device 950 affixed to an informational document such as an advertising or instructional poster can store, for reading by one or more active device(s) 110, any information desired to be imparted to the device(s) 110 and/or users thereof. For example, a device 950 affixed to an advertising poster can store information related to a product, such as an item of clothing, an entertainment event, or a food product purchasable by a user of a device 110.

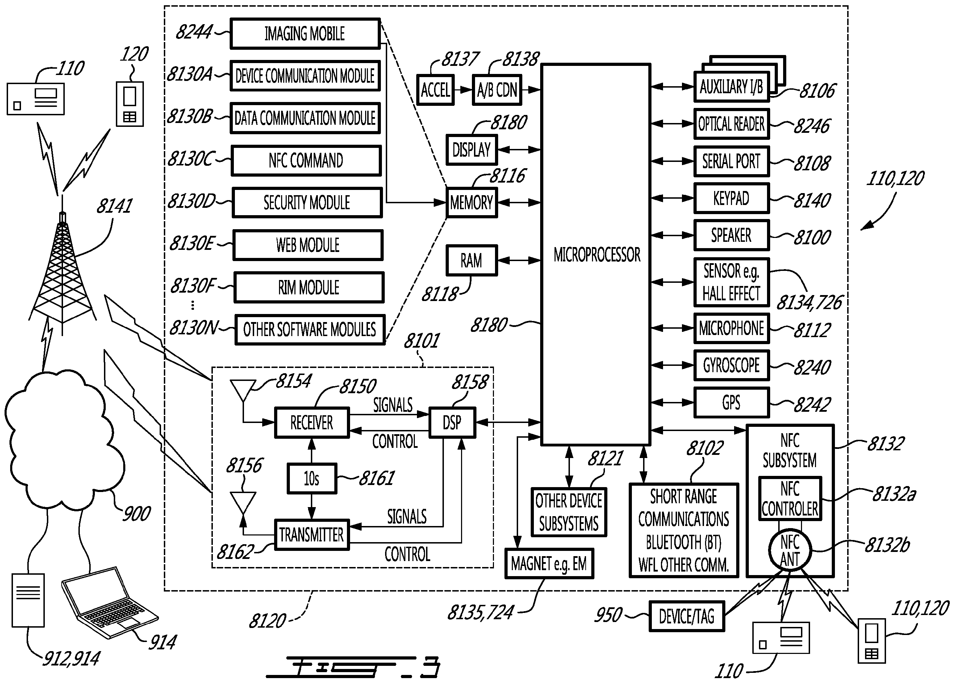

Alternatively, or in addition, a device 950 can store data such as a uniform resource locator (URL) or other address information, such as a telephone number, readable by active device(s) 110 and suitable for directing a processor associated with the device(s) 110 to establish one or more uni- or multi-direction communications sessions with commonly-controlled and/or third-party resources via one or more networks 900, as shown in Figures 2 and 3.

Such networked resources can, for example, include vendor, enterprise, or other servers, computers, smartphones, etc.

A somewhat more general embodiment of a system 100 for implementing aspects of the disclosure is shown schematically in Figure 3. In the embodiment of Figure 3, an active wireless handheld device 110, 120 is configured for communication with a wide variety of external devices via a number of communications (sub)systems. For example, using an NFC (sub)system 8132, the device 110 is configured to communicate with any one or more of passive NFC device(s) 950, such as RFID or other NFC tags; optionally non-mobile active device(s) 110, such as stationary computers or other devices, including for example vendor point-of-sale transaction devices); and/or NFC-capable mobile devices 120 such as smartphones and/or laptop, palmtop, and/or tablet computers.

As explained further below, the device 110, 120 shown in Figure 3 is further capable, via wireless communications (sub)system 8101, of communicating with a wide range of devices, including for example server(s) 912 and/or other computers 914 via the internet, the public switched telephone network (PSTN) and/or other wired wide-area or local-area public or private network(s) 900, and/or one or more smartphones, computers 914, servers 912, and other active systems 110 via cellular and/or other wireless telephone networks. For example, an active NFC device 110, 120 may be communicatively coupled to one or more wireless local area networks (WLANs), such as a Wireless Fidelity (WiFi) network, or a wireless wide area network (WWAN) such as 3GPP or 4G Long Term Evolution (LTE) network (not shown). By way of non-limiting example, and as will be appreciated by those skilled in the relevant arts, WiFi is typically deployed as a WLAN that may extend home and business networks to wireless medium and may follow an IEEE 802.11 or other standard. A wireless communications connection may also be established using, for example, short-range communications subsystems which may include an infrared device and associated circuits and components as described above, or a Bluetooth communications module, to provide for communication with similarly-enabled systems and devices as well as the NFC communications.

Figure 3 shows a non-limiting example of a range of various functional components that may be included in an exemplary handheld or other mobile wireless communications device 120. In the example shown, device 110, 120 includes, among other components, housing(s) 8120; input device(s) such as keypad(s) 8140, microphone(s) 8112, accelerometer(s) 8137, analog/digital (a/d) converter(s) 8138, touchscreen display(s) 8160, hall effect or other field/proximity sensor(s) 8134, 726, gyroscope(s) 8240, global positioning system(s) (GPS(s)) 8242, and optical reader(s) 8246, such as one or more digital cameras and/or barcode readers, quick response (QR) readers, or other scanners; output device(s) such as touchscreen or other display(s) 8160, speakers(s) 8110, and magnet(s) or other field/proximity generator(s) 8135, 724; and input/output (I/O) device(s) such as uniform serial bus (USB) auxiliary input/output port(s) 8106, parallel or serial port(s) 8108, NFC (sub)system(s) 8132, including Bluetooth and/or other short-range communication (sub)system(s), and wireless/radio transceiver (sub)system(s) 8101.

As will occur to those skilled in the relevant arts, device(s) 110, 120 may include any of a wide variety of these and other components and (sub)systems, in any desired combination(s); and they may interact in any of a wide variety of ways, in addition to those described herein.

As will further be understood by those skilled in the relevant arts, handheld device(s) 120 can comprise any of a very wide range of mobile devices, including for example cellphones, smartphones, and other radio-based communications devices, as well as laptop, palmtop, and tablet computers. "Handheld" means portable and operable using one or both hands; and, in the case of smart phones, can but does not necessarily mean devices that are roughly the size of an average human palm.

One or more processors 8180, 8158, 8138, 8132(a), etc., working singly or in any desirable or otherwise suitable combinations, can use inputs generated and/or otherwise provided by any one or more of the various input device(s) input device(s) 8140, 8112, 8137, 8138, 8160, 8134, 8240, 8242, 8106, 8108, 8132, 8101 and locally and/or remotely-accessible peripheral devices, such as printers, servers, telephones, computers, etc., to generate, according to suitably-configured logic rules, output signals suitable for processing by any one or more of the various output device(s) 8160, 8110, 8135, 8106, 8108, 8132, 8101, and locally and/or remotely-accessible peripheral devices, etc..

Any or all of processor(s) 8180, 8158, 8138, 8132(a), etc., along with any other desired components and/or (sub)systems incorporated, by a device 120 may be protectively and/or functionally contained within housing 8120(s) coupled, as for example by means of suitably-configured buses, etc., between the various memory, input, output, and auxiliary devices (such as battery(ies), solar power generators, etc) in order to perform the functions disclosed herein. Processor(s) 8180, 8158, 8138, 8132(a) may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 810, in response to received information and inputs, such as in response to actuation of keys on the keypad 8140 by the user. Processors, 8158, 8138, 8132(a), etc., may be provided to control specialized functions such as operation of NFC and other particular communications channels.

Logic rules suitable for use by processors 8180, 8158, 8138, 8132(a) in generating such outputs can be accessed from any suitable locally and/or remotely located source(s), including, for example, any one or more applications modules 8130A - N, 8244, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s).

Memory(ies) 8118, 8116, etc., which can be of any form compatible with the purposes disclosed herein, including, for example, flash, EEPROM, RAM, ROM, disk, register, etc., can be accessed, controlled, and otherwise used 8180, 8158, 8138, 8132(a), etc., for reading data used in the various processes described herein, for storing output so generated, and for holding executable forms of suitably-configured application and/or module instruction sets. Such stored data may, for example include operating system and other software executed by the processing device 8180.

As shown in Figure 3, an active NFC device 110 can comprise multiple communications abilities, and thus may have the ability to conduct concurrent communications sessions with other devices 110, 950, 912, 914, etc., using NFC voice, and/or other communication means. For example, as illustrated, NFC capable device 110 may be engaged in peer-to-peer communication with a second NFC capable device 110, while also communicating with a baseband access point 912, 914, which may take the form of a cellular base station, for example.

Long-range (e.g., cellular) voice and/or text communications processes may be provided for an active device 110, 120 by one or more wireless communications subsystems 8101, comprising transmitter(s) 8152, 8156, receiver(s) 8150, 8154, and digital signal processor(s) (DSP(s)) 8158.

Short-range communications may be provided by either or both of NFC subsystem(s) 8102, 8132, which may or may comprise dedicated antenna systems for short-range aspects; specialized memory device(s) 8116, 8118, and other device subsystems 8121.

Mobile device(s) 110, 120 in accordance with the disclosure may therefore be considered, in the examples shown, example, two-way RF communications devices having voice and data communications capabilities using RF circuitry. In addition, the mobile device 110, 120 may have the capability to communicate with other computer systems 110, 912, 914, etc., via the Internet or other network(s) 900. For example, a device 110, 120 may communicate with one or more servers 912, such as Internet servers, via RF subsystems 8101 and the associated components, including web module 8130e, and further via short-range communications subsystem(s) 8102, such as via web/browser module(s) 8130e. System(s) 8102 may include, for example, one or more Bluetooth communications modules for establishing Bluetooth wireless connection(s), and other communications modules, such as infrared modules or devices, WiFi circuits and modules, and associated components and circuits that may also form part of the RF circuitry.

A predetermined set of applications that control basic and optional device operations, such as data and voice communications 8130A and 8130B, may be installed on the device 110, 120 during manufacture. Application modules 8130A-N may include native and non-native modules for security 8130D, Web interaction 8130E, social interactions or applications, and the like.

NFC communications module(s) 8130C may include hardware and/or software to enable NFC controller(s) 8132A (which may themselves include hardware, software, and firmware a required) and with the microprocessor 8180, to perform NFC communications tasks, such as through the memory 8116. NFC communications module(s) 8130C may, in various embodiments, support responsive operability for tag 950 reads/writes, whether virtual or physical, by interacting with other modules and apps to affect data stored on tag(s) 950, and/or to obtain or write tag data. Such other modules may for example include web module 8130E, PIM module 8130F, and other software modules 8130N (such as apps and video players, by way of non-limiting examples). Microprocessor(s) 8180 may also cooperate with NFC module(s) 8130C, and with NFC subsystem(s) 8132, which may include one or more NFC chips comprising NFC controller(s) 8132a, and antenna(s) 8132b to facilitate communications with other active and/or inactive NFC device(s) 110, 950, as discussed herein. For example, an NFC communications module 8130C may allow a microprocessor 8180 to control the NFC subsystem 8132 and/or memory stores 8116, 8118.

NFC chips suitable for use in implementing aspects of the disclosure may, for example, comprise one or more PN531 microcontroller-based transmission modules produced by Koninklijke Phillips Electronics N.V. Such NFC chips 8132a may, for example, include both digital and analog circuitry, and one or more contactless Universal Asynchronous Receiver Transmitters (UARTs), cores, and host interfaces. Incorporated circuitry may include output drivers, integrated demodulators, bit decoders, mode detectors and RF-, magnetic, and/or level detectors as suitable. Suitable contactless UARTs may include elements for data processing, Cyclical Redundancy Checking (CRC), parity generation, framing generation and check bit coding and decoding, and/or other functions. Cores may, for example, include one or more 80C51 microcontroller, 32 Kbytes or other amounts of ROM and, one Kbyte or other amounts of RAM, for example. A set of host interfaces may interface with the microprocessor and interface according to such known standards as I2C, serial UART, SPI and USB. NFC circuits may be tuned to any frequency(ies) suitable for accomplishing the purposes disclosed herein, as for example about 13.56 MHz.

NFC (sub)system(s) 8132 may include and/or otherwise cooperate with one or more magnets/magnetometers or other magnet sensors 8134, such as Hall effect sensors, communicatively connected to the microprocessor 8180, 8132a. Sensor(s) 8134 may include components suitable for operation as a Hall effect sensor, including any necessary coils or other circuits. There is also illustrated a magnet/magnetometer 8135 that, in various embodiments, may be advantageously be provided in the form of one or more electromagnets and may operates with microprocessor(s) 8180, 8132am etc., to allow one or more alternate communications pathways using electromagnetic energy, which may be changed to correspond to changing data. Electromagnet(s) 8135 may perform a variety of different functions, including working as an active or passive device in association with other components of the device 110. For example, when an electromagnet 8135 is used instead of a permanent magnet (non-electromagnetic) in the devices of Figure 3, a pulse of energy may be delivered to the Hall effect sensor in another device. The other device receiving the pulse may accordingly activate its NFC circuit. A WiFi connection, for example, in the alternative may be established if an NFC and/or Bluetooth connection is not established. Other modules 8130N may include, for example, software that interoperates with the magnetic sensor 8134 and any magnet or electromagnet 8135 or other magnetic circuitry that may be included within the overall electromagnet 8135.

In addition, personal information manager (PIM) application module(s) 8130F may be or include one or more native modules installed during manufacture. PIM(s) 8130F may be capable of organizing and managing data items, such as email, contacts, calendar events, voice mails, appointments, and task items. The PIM application is also capable of sending and receiving data items via a wireless network. The PIM data items are seamlessly integrated, synchronized and updated via the wireless network with the device user's corresponding data items, such as may be stored in the cloud or as may be associated with a host computer system, for example.

Communication functions, including data and voice communications, may be performed through the communications subsystem 8101, and/or through the short-range communications subsystem 8102, which may be part of the circuitry contained in device 810. The specific design and implementation of the communications subsystems 8101 and 8102 may be dependent upon the communications network in which the mobile device 810 is intended to operate.

Such communication functions may, as referenced above, be carried out by data module 8130B, voice module 8130A, and web module 8130D, including at the instruction of NFC module 8130C in accordance with the disclosed embodiments, with security for these communications, such as in the granting of access to PIM module 8130F, overseen by a security module 8130D. A security module 8130D may include one or more native or non-native security applications, including anti-virus/anti-malware applications or functions, and protection of PIM information via applications or functions, during external interactions, may occur via NFC or via the Web, for example. Accordingly, security module 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

As previously noted, NFC processes may be conducted according to any of a wide variety of wireless, short-range communications protocols. Such protocols typically comprise sets of standards to enable devices 110, 120, such as smartphones and the like, to establish radio communication with each other by bringing them into close proximity, or by touching them together. Applications include wireless data transactions and simplified setup of communication sessions involving other communication technologies, such as Wi-Fi and Bluetooth. Communication is also possible between a powered NFC device and a powered or unpowered NFC "tag" or button. Suitable standard currently in use are have been p promulgated by the NFC Forum, which was founded in 2004 by Nokia, Philips and Sony, and which now has more than 160 members. The NFC Forum also promotes NFC and certifies device compliance.

Standards have been developed that cover both NFC Forum - sanctioned communication protocols and other short-range wireless data exchange (NFC) formats. Specifically, an example of NFC standards ISO/IEC 18092 / ECMA-340; Near Field Communication Interface and Protocol-1 (NFCIP-1); ISO/IEC 21481 / ECMA-352; and Near Field Communication Interface and Protocol-2 (NFCIP-2). NFC also encompasses a variety of pre-existing standards including ISO/IEC 14443 both Type A and Type B, and FeliCa. The standards specify the NFC air interface, modulation schemes, coding, transfer speeds, and frame format of the RF interface of NFC devices. The standards also comprise initialization schemes and conditions required for data collision-control during initialization for both active and passive NFC modes. In addition, they define a transport protocol, including protocol activation and data-exchange methods.

NFC protocols sanctioned by the NFC forum typically operate within a globally available and unregulated radio frequency band of 13.56 MHz, and generally have a working distance of up to about 20 centimeters. Three data rates are currently defined in the NFC standards: 106 kilobits per second (kbit/s); 212 kbit/s; and 424 kbit/s.

In addition, the NFC Forum has defined a common data format called NFC Data Exchange Format (NDEF), which can store and transport various kinds of items, such as MIME-typed objects and URLs. The NFC Forum also added the Simple NDEF Exchange Protocol for sending and receiving messages between two NFC-enabled devices.

Both passive and active communications modes have been defined. In active communication modes, both an initiator device and a Target device may generate their own NFC fields 1000 (see e.g., Figures 1 and 2). The initiator device may start the NFC communication, with the target device responding to commands received from the initiator device, as appropriate, by modulating the NFC field 1000 generated by the Target device.

Between two active NFC devices 110, either or both devices can act as either initiator or target. In passive communication mode, one of the devices lacks, or does not employ an ability to independently create an electro-magnetic NFC carrier field 1000, and therefore generally does not serve as an initiator.

As previously noted, systems 100, and devices 110, 120, 950 in accordance with the disclosure can be used to significant advantage in a very wide variety of applications.

As a particular example, the disclosure herein provides improved methods for making and writing data to smart posters, and for systems 100 and devices 110, 120, 950, useful for making and writing data to such posters.

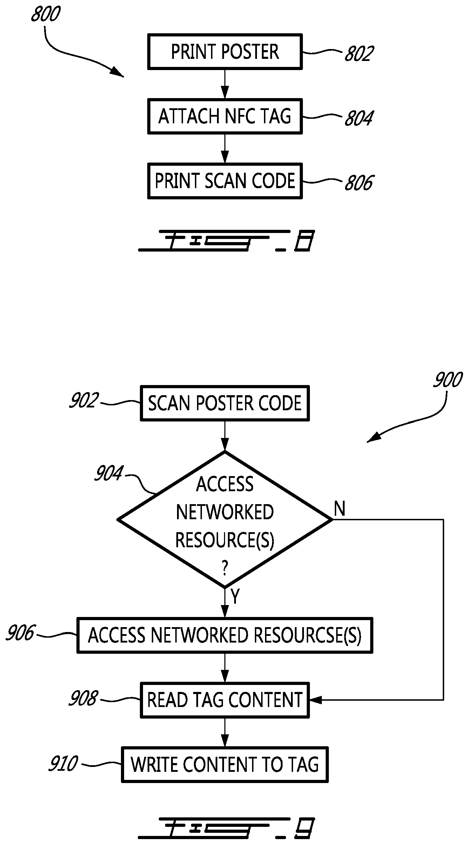

Figure 8 provides a schematic flow diagram of a process 800 useful for making smart posters in accordance with the disclosure. As will be made plain to those skilled in the relevant arts, as they become familiar with this disclosure, the order of steps shown and described in disclosing processes herein is not to be tied to the specific order in which they are shown and/or described, unless a specific order is expressly required or is inherent in the nature of the processes. As an example, steps 802, 804, and 806 of process 800 can be performed in any efficient or otherwise desired order, and/or they can be performed simultaneously. They are described here in the order shown in Figure 8 solely for clarity and the convenience of the reader.

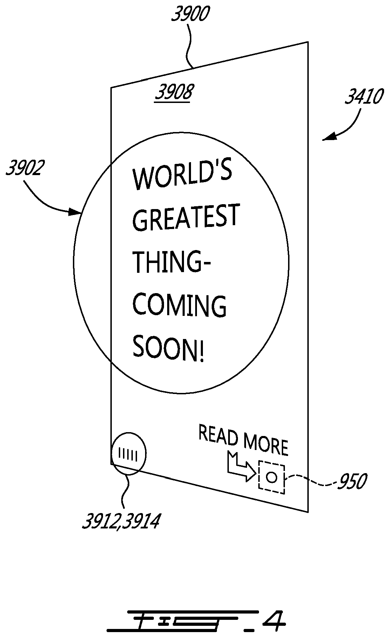

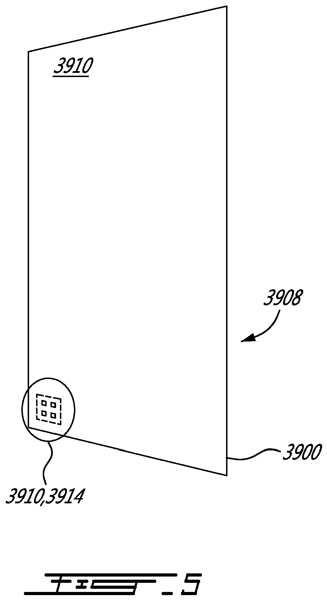

At 802, human-interpretable information is printed on at least one surface of a display(able) substrate. For example, text and/or one or more images are printed on a sheet of paper, plastic, or other postable or otherwise displayable substance (including for example a wall of a building or other structure) using ink(s), paint(s), or other fixable material in accordance with known poster, flyer, placard, or other printing processes, including holographic and other processes giving the illusion of depth and/or movement. Information printed on the poster can comprise any necessary or otherwise desired text and/or image(s), in any desired combination(s). See, for example, poster 3900 of Figures 4 and 5, comprising substrate 3906 having first and second (e.g., front and rear) surfaces 3908 and 3910, and human-interpretable information 3902.

At 804, one or more storage devices, such as RFID or other NFC-capable tags 950, are attached to the substrate 3900, either by embedding them within the substrate or affixing them to one or both surfaces 3908, 3910 thereof. Such devices can, for example, be embedded within the substrate 3900 as a part of the substrate manufacturing process, and/or can be permanently and/or removably attached using adhesives, as for example through the use of suitably-configured labels.

At 806, one or more machine-readable objects 3912, such as bar code(s) 3914, QR code(s) 3916, and/or other machine-vision compatible codes are provided on the substrate 3900. Object(s) 3912 can be placed on the substrate by any suitable means, as for example by printing them or applying suitably-configured permanent or removable adhesive labels to either or both surfaces 3908, 3910 of the substrate 3900.

Object(s) 3912 provided on the substrate 3900 can represent instructions configured to enable a controller, such as a controller 8132a of an NFC (sub)system 8132, to write to the attached storage device(s) data readable by a plurality of wireless NFC-enabled devices 110, 112, and may be affixed to either or both surfaces 3908, 3910 of the substrate 3900. In some embodiments, it may be preferable to play object(s) on a rear surface 3910 of the substrate 3900, so as, for example, not to alter or interfere with an artistic or otherwise aesthetic and/or functional image or text display printed on the front side 3908 of the substrate. Storage devices in accordance with the disclosure may, for example be readable and/or writeable according to any one or more desired NFC protocols.

Completed posters may be affixed, permanently or removably, to vehicle and/or building walls, billboards or other placards, or other suitable display surfaces either before and/or after writing of content data to the tag(s) or other storage device(s) 950 as described herein.

As will be understood by those skilled in the relevant arts, process(es) 400 can be performed by human(s) and/or suitably-configured automatic printing/processing machines, or by any desired or otherwise suitable combination(s) thereof. For example, all or parts of such processes may be implemented using conventional printing presses, modified as needed to achieve the objects disclosed herein.

Figure 9 provides a schematic flow diagram of a process 900 useful for writing data to smart posters in accordance with the disclosure. As noted above, the order of steps shown and described in disclosing processes herein is not to be tied to the specific order in which they are shown and/or described, unless a specific order is expressly required or is inherent in the nature of the processes. In many cases, it is possible, and even advantageous, to combine and/or alter the order of process steps disclosed herein.

At 902, a user 1002 of a wireless handheld or other NFC-enabled device 110, 120 can approach a poster 3900 implemented in accordance with the disclosure herein, which poster 3900 may, for example, be fully or partly fixed to a wall or other display surface, or may be lying on a table or other surface prior to installation. Placing the device 110, 112 within suitable juxtaposition to one or more barcodes 3912, QR codes 3914, and/or other machine-readable objects 3910, and optical reader(s) 8246, 8244, etc., the user 1002 may initiate barcode, QR code, and/or other scanning or machine reading operation(s). Such machine reading operation(s) may, for example be conducted using known and/or subsequent specifically-designed machine reading protocols.

Device(s) 8246, 8244, etc., having read the machine-readable object(s) 3910, the object(s) 3910 may by means of any or all of processors 8180, etc., comprised by the device 110, 112, interpret the read object(s), and as directed thereby initiate process(es) for generating and/or otherwise accessing data to be stored on one more tags or other storage devices 950 attached to the substrate 3900.

Depending on the uses and requirements of the poster 3900 and/or associated systems 100 and processes, at 904 one or more processors 8180, etc., of the user's device 110, 112 can determine whether content to be stored in the device(s) 950 attached to the poster 3900 are stored in, and to be read or otherwise retrieved from, and one or more of local and/or remotely-accessed memories. For example, processes initiated using the machine-read object(s) 3910 can facilitate typing from a keypad 8140 and/or touchscreen 8160, and subsequent storage in and retrieval from volatile (transient) and/or persistent (non-transient) memory of the device 110, 112, and/or reading of previously-stored data from memory(ies) 8116, 8118 on device 110, 112, and/or remotely stored and retrieved from any remote networked resource(s), such as any or all of resource(s) 912, 914, 110, 120, etc.

At 906, the device 110, 112 can access any/all desired content or other data stored in any networked resources.

At 908, any data accessed at 906, together with any data generated by or otherwise accessed locally on the device 110, 112 can be read and processed as needed for storage on the device(s) 950 of poster 3900. For example, content accessed from a variety of resources can be properly collated, (re-)formatted according to any desired protocol(s), and stored in volatile and/or persistent memory (e.g., one or more registers or buffers) 8116, 8118 on the device 110, 112.

When content and/or other data to be written to the tag(s) or other device(s) 950 of poster 3900 is ready to be written to the device(s), the user 1002 can place the device 110, 112 in sufficient proximity to the device(s) 850 to initiate NFC functions enabled by, for example, either or both of NFC (sub)systems 8132, 8102, using process(es) and/or protocols disclosed herein.

Data written to device(s) 950 at 910 can comprise any desired content and/or command or instruction signals. For example, such data can comprise content data useable by a plurality of user devices 110, 112 to display images and/or text thematically or otherwise logically related to human-interpretable information 3902 printed on the substrate 3900. For example, as noted above, data representing further information, including for example plot summaries and/or promotional deals, related to a move or other entertainment an be provided.

Such data may be stored directly on device(s) 950 attached to the poster 3900, and/or can be retrieved from remote networked resources 912, 914, etc. For example data stored on device(s) 950 can comprise either or both of content directly interpretable by one or more user devices 110, 112, to display information associated with information 3902, and URL or other address information adapted to direct such user device(s) 110, 112 to remote resource(s) 912, 914 etc. to access (further) content stored thereby.

In further aspects, the disclosure provides posters made in accordance with any of the foregoing methods.

In further aspects, the disclosure provides systems, methods, and computer programming products, including non-transient machine-readable instruction sets, for use in implementing such methods and making such posters.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A system comprising a smart poster and a wireless communications device (110, 120), the poster comprising:
printed static human-interpetable information on a display substrate (3900);
a storage device (950) attached to the substrate, the storage device being readable by a plurality of wireless communications devices; and
a device provided on the substrate, the device comprising at least one machine-readable object,
the wireless communications device (110, 120) comprising a controller (8132a) configured to read the at least one machine-readable object, the at least one machine-readable object (3912) representing instructions configured to enable the controller (8132a) to write to the storage device data readable by the plurality of wireless devices.

2. The system of claim 1, wherein the machine readable object (3912) is provided on a side of the substrate other than a side on which the static human-interpretable information is printed.

3. The system of claim 1, wherein the machine-readable object (3912) comprises a bar code.

4. The system of claim 1, wherein the machine-readable object (3912) comprises a quick response (QR) code.

5. The system of claim 1, wherein the storage device (950) is readable and writeable according to at least one near-field communication (NFC) protocol.

6. The system of claim 1, wherein the substrate (3900) comprises a sheet of paper.

7. The system of claim 1, wherein the machine-readable object (3912) is printed on the substrate (3900).

8. The system of claim 1, wherein the machine-readable (3912) object is affixed an adhesive label attached to the substrate (3900).

9. The system of claim 1, wherein the machine-readable object (3912) is removably attached to the substrate (3900).

10. A method (900) of writing data to a smart poster using the system according to claims 1-9, comprising:
reading (904), by a controller (8132a) of a wireless handheld communication device, at least one machine-readable object (3912) on a display substrate (3900) bearing printed, static, human-interpretable information;
based at least partly on interpretation of the machine-readable object (3912), initiating a wireless communications session with at least one wirelessly-encodable storage device (950) attached to the substrate, the data storage device readable by a plurality of wireless devices; and
writing to the at least one wirelessly-encodable storage device (950) attached to the substrate data readable by the plurality of wireless devices.

11. The method of claim 10, wherein the data written to the wirelessly-encodable storage device (950) attached to the substrate (3900) comprises content logically related to the printed, static, human-interpretable information.

12. The method of claim 10, wherein the data written to the wirelessly-encodable storage device (950) attached to the substrate (3900) comprises address information configured to enable at least one processor to access data stored on a remote networked resource.

13. The method of claim 12, wherein the address information comprises data representing a uniform resource locator (URL).

14. The method of claim 10, wherein the data written to the wirelessly-encodable storage device (950) is read by the controller (8132a) from memory on the wireless handheld communication device.

15. The method of claim 14, wherein the data accessed by the wireless handheld communication device from memory on the wireless handheld communication device comprises data generated from signals provided by a keyboard of the wireless handheld communication device.

16. The method of claim 10, wherein the data written to the wirelessly-encodable storage device (950) is read by the controller (8132a) from memory accessed by the wireless handheld communication device from remote networked data storage.

17. The method of claim 10, wherein the machine readable object (3912) is provided on a side of the substrate other than a side on which the static human-interpretable information is printed.

18. The method of claim 10, wherein the machine-readable object (3912) comprises a bar code.

19. The method of claim 10, wherein the machine-readable object (3912) comprises a quick response (QR) code.

20. The method of claim 10, wherein the storage device (950) is readable and writeable according to at least one near-field communication (NFC) protocol.

21. The method of claim 10, wherein the substrate (3900) comprises a sheet of paper.

22. The method of claim 10 wherein the machine-readable object (3912) is printed on the substrate (3900).

23. The method of claim 10, wherein the machine-readable (3912) object is affixed an adhesive label attached to the substrate (3900).

24. The method of claim 10, wherein the machine-readable object (3912) is removably attached to the substrate (3900).

## Patentansprüche

1. System, das ein Smartposter und eine drahtlose Kommunikationsvorrichtung (110, 120) aufweist, wobei das Poster aufweist:
gedruckte, statische, vom Menschen interpretierbare Information auf einem Anzeigesubstrat (3900);
eine Speichervorrichtung (950), die an dem Substrat angebracht ist, wobei die Speichervorrichtung durch eine Vielzahl von drahtlosen Kommunikationsvorrichtungen lesbar ist; und
eine Vorrichtung, die auf dem Substrat vorgesehen ist, wobei die Vorrichtung zumindest ein maschinenlesbares Objekt aufweist,
wobei die drahtlose Kommunikationsvorrichtung (110, 120) eine Steuervorrichtung (8132a) aufweist, die konfiguriert ist zum Lesen des zumindest einen maschinenlesbaren Objekts, wobei das zumindest eine maschinenlesbare Objekt (3912) Anweisungen repräsentiert, die konfiguriert sind, um der Steuervorrichtung (8132a) zu ermöglichen, Daten in die Speichervorrichtung zu schreiben, die durch die Vielzahl von drahtlosen Vorrichtungen lesbar sind.

2. Das System gemäß Anspruch 1, wobei das maschinenlesbare Objekt (3912) auf einer Seite des Substrats vorgesehen ist, die von einer Seite verschieden ist, auf der die statische, vom Menschen interpretierbare Information gedruckt ist.

3. Das System gemäß Anspruch 1, wobei das maschinenlesbare Objekt (3912) einen Barcode aufweist.

4. Das System gemäß Anspruch 1, wobei das maschinenlesbare Objekt (3912) einen QR(quick response)-Code aufweist.

5. Das System gemäß Anspruch 1, wobei die Speichervorrichtung (950) gemäß zumindest einem Nahfeldkommunikation(NFC - near-field communication)-Protokoll lesbar und beschreibbar ist.

6. Das System gemäß Anspruch 1, wobei das Substrat (3900) ein Blatt Papier aufweist.

7. Das System gemäß Anspruch 1, wobei das maschinenlesbare Objekt (3912) auf das Substrat (3900) gedruckt ist.

8. Das System gemäß Anspruch 1, wobei an dem maschinenlesbaren Objekt (3912) ein Klebeetikett angebracht ist, das an dem Substrat (3900) befestigt ist.

9. Das System gemäß Anspruch 1, wobei das maschinenlesbare Objekt (3912) entfernbar an dem Substrat (3900) angebracht ist.

10. Verfahren (900) zum Schreiben von Daten auf ein Smartposter unter Verwendung des Systems gemäß den Ansprüchen 1-9, das aufweist:
Lesen (904), durch eine Steuervorrichtung (8132a) einer drahtlosen handgehaltenen Kommunikationsvorrichtung, zumindest eines maschinenlesbaren Objekts (3912) auf einem Anzeigesubstrat (3900), das gedruckte, statische, vom Menschen interpretierbare Information umfasst;
basierend zumindest teilweise auf einer Interpretation des maschinenlesbaren Objekts (3912), Initiieren einer drahtlosen Kommunikationssitzung mit zumindest einer drahtlos-codierbaren Speichervorrichtung (950), die an dem Substrat angebracht ist, wobei die Datenspeichervorrichtung durch eine Vielzahl von drahtlosen Vorrichtungen lesbar ist; und
Schreiben in die zumindest eine drahtlos-codierbare Speichervorrichtung (950), die an dem Substrat angebracht ist, von Daten, die durch die Vielzahl von drahtlosen Vorrichtungen gelesen werden können.

11. Das Verfahren gemäß Anspruch 10, wobei die Daten, die in die drahtlos-codierbare Speichervorrichtung (950) geschrieben werden, die an dem Substrat (3900) angebracht ist, einen Inhalt aufweisen, der logisch mit der gedruckten, statischen, vom Menschen interpretierbaren Information in Bezug steht.

12. Das Verfahren gemäß Anspruch 10, wobei die Daten, die in die drahtlos-codierbare Speichervorrichtung (950) geschrieben werden, die an dem Substrat (3900) angebracht ist, Adressinformation aufweisen, die konfiguriert ist, um zumindest einem Prozessor einen Zugriff auf Daten zu ermöglichen, die auf einer entfernten vernetzten Ressource gespeichert sind.

13. Das Verfahren gemäß Anspruch 12, wobei die Adressinformation Daten aufweist, die einen URL (uniform resource locator) repräsentieren.

14. Das Verfahren gemäß Anspruch 10, wobei die Daten, die in die drahtlos-codierbare Speichervorrichtung (950) geschrieben werden, von der Steuervorrichtung (8132a) aus einem Speicher auf der drahtlosen handgehaltenen Kommunikationsvorrichtung gelesen werden.

15. Das Verfahren gemäß Anspruch 14, wobei die Daten, auf die die drahtlose handgehaltene Kommunikationsvorrichtung aus dem Speicher der drahtlosen handgehaltenen Kommunikationsvorrichtung zugreift, Daten aufweisen, die aus Signalen erzeugt werden, die von einer Tastatur der drahtlosen handgehaltene Kommunikationsvorrichtung vorgesehen werden.

16. Das Verfahren gemäß Anspruch 10, wobei die Daten, die in die drahtlos-codierbare Speichervorrichtung (950) geschrieben werden, durch die Steuervorrichtung (8132a) aus dem Speicher gelesen werden, auf den die drahtlose handgehaltene Kommunikationsvorrichtung zugreift von einem entfernten vernetzten Datenspeicher.

17. Das Verfahren gemäß Anspruch 10, wobei das maschinenlesbare Objekt (3912) auf einer Seite des Substrats vorgesehen wird, die von einer Seite verschieden ist, auf der die statische, vom Menschen interpretierbare Information gedruckt ist.

18. Das Verfahren gemäß Anspruch 10, wobei das maschinenlesbare Objekt (3912) einen Barcode aufweist.

19. Das Verfahren gemäß Anspruch 10, wobei das maschinenlesbare Objekt (3912) einen QR(quick response)-Code aufweist.

20. Das Verfahren gemäß Anspruch 10, wobei die Speichervorrichtung (950) gemäß zumindest einem Nahfeldkommunikation(NFC - near-field communication)-Protokoll lesbar und beschreibbar ist.

21. Das Verfahren gemäß Anspruch 10, wobei das Substrat (3900) ein Blatt Papier aufweist.

22. Das Verfahren gemäß Anspruch 10, wobei das maschinenlesbare Objekt (3912) auf das Substrat (3900) gedruckt ist.

23. Das Verfahren gemäß Anspruch 10, wobei an dem maschinenlesbaren Objekt (3912) ein Klebeetikett angebracht ist, das an dem Substrat (3900) befestigt ist.

24. Das Verfahren gemäß Anspruch 10, wobei das maschinenlesbare Objekt (3912) entfernbar an dem Substrat (3900) angebracht ist.

## Revendications

1. Système comprenant une affiche intelligente et un dispositif de communication sans fil (110, 120), l'affiche comprenant:
des informations statiques interprétables par l'homme sur un substrat d'affichage (3900);
un dispositif de mémorisation (950) fixé au substrat, le dispositif de mémorisation pouvant être lu par une pluralité de dispositifs de communication sans fil; et
un dispositif prévu sur le substrat, le dispositif comprenant au moins un objet lisible par machine, le dispositif de communication sans fil (110, 120) comprenant un contrôleur (8132a) configuré pour lire au moins un objet lisible par machine, au moins un objet lisible par machine (3912) représentant des instructions configurées pour permettre au contrôleur (8132a) d'écrire dans le dispositif de mémorisation des données lisibles par la pluralité de dispositifs sans fil.

2. Système selon la revendication 1, dans lequel l'objet lisible par machine (3912) est prévu sur un côté du substrat autre qu'un côté sur lequel les informations statiques interprétables par l'homme sont imprimées.

3. Système selon la revendication 1, dans lequel l'objet lisible par machine (3912) comprend un code à barres.

4. Système selon la revendication 1, dans lequel l'objet lisible par machine (3912) comprend un code à réponse rapide (QR).

5. Système selon la revendication 1, dans lequel le dispositif de mémorisation (950) est lisible et inscriptible selon au moins un protocole de communication en champ proche (NFC).

6. Système selon la revendication 1, dans lequel le substrat (3900) comprend une feuille de papier.

7. Système selon la revendication 1, dans lequel l'objet lisible par machine (3912) est imprimé sur le substrat (3900).

8. Système selon la revendication 1, dans lequel l'objet lisible par machine (3912) est apposé sur une étiquette adhésive fixée au substrat (3900).

9. Système selon la revendication 1, dans lequel l'objet lisible par machine (3912) est fixé de manière amovible au substrat (3900).

10. Procédé (900) d'écriture de données sur une affiche intelligente utilisant le système selon les revendications 1 à 9, comprenant de :
lire (904), par un contrôleur (8132a) d'un dispositif de communication portable sans fil, au moins un objet lisible par machine (3912) sur un substrat d'affichage (3900) portant des informations imprimées, statiques, interprétables par l'homme;
sur la base au moins en partie de l'interprétation de l'objet lisible par machine (3912), lancer une session de communication sans fil avec au moins un dispositif de mémorisation codable sans fil (950) fixé au substrat, le dispositif de mémorisation de données pouvant être lu par une pluralité de dispositifs sans fil ; et
écrire sur au moins un dispositif de mémorisation codable sans fil (950) fixé aux données de substrat lisibles par la pluralité de dispositifs sans fil.

11. Procédé selon la revendication 10, dans lequel les données écrites sur le dispositif de mémorisation codable sans fil (950) fixé au substrat (3900) comprennent un contenu lié logiquement aux informations imprimées, statiques, interprétables par l'homme.

12. Procédé selon la revendication 10, dans lequel les données écrites sur le dispositif de mémorisation codable sans fil (950) fixé au substrat (3900) comprennent des informations d'adresse configurées pour permettre à au moins un processeur d'accéder à des données mémorisées sur une ressource de réseau distante.

13. Procédé selon la revendication 12, dans lequel les informations d'adresse comprennent des données représentant un localisateur de ressources uniforme (URL).

14. Procédé selon la revendication 10, dans lequel les données écrites sur le dispositif de mémorisation codable sans fil (950) sont lues par le contrôleur (8132a) à partir de la mémoire du dispositif de communication portable sans fil.

15. Procédé selon la revendication 14, dans lequel les données accédées par le dispositif de communication portable sans fil à partir de la mémoire du dispositif de communication portable sans fil comprennent des données générées à partir de signaux fournis par un clavier du dispositif de communication portable sans fil.

16. Procédé selon la revendication 10, dans lequel les données écrites dans le dispositif de mémorisation codable sans fil (950) sont lues par le contrôleur (8132a) à partir de la mémoire accédée par le dispositif de communication portable sans fil à partir d'une unité de mémorisation de données en réseau distant.

17. Procédé selon la revendication 10, dans lequel l'objet lisible par machine (3912) est prévu sur un côté du substrat autre qu'un côté sur lequel les informations statiques interprétables par l'homme sont imprimées.

18. Procédé selon la revendication 10, dans lequel l'objet lisible par machine (3912) comprend un code à barres.

19. Procédé selon la revendication 10, dans lequel l'objet lisible par machine (3912) comprend un code à réponse rapide (QR).

20. Procédé selon la revendication 10, dans lequel le dispositif de mémorisation (950) est lisible et inscriptible selon au moins un protocole de communication en champ proche (NFC).

21. Procédé selon la revendication 10, dans lequel le substrat (3900) comprend une feuille de papier.

22. Procédé selon la revendication 10, dans lequel l'objet lisible par machine (3912) est imprimé sur le substrat (3900).

23. Procédé selon la revendication 10, dans lequel l'objet lisible par machine (3912) est apposé sur une étiquette adhésive fixée au substrat (3900).

24. Procédé selon la revendication 10, dans lequel l'objet lisible par machine (3912) est fixé de manière amovible au substrat (3900).
